(19) Europäisches Patentamt
European Patent Office
Office européen des brevets

(11) **EP 1 667 124 A2**

(12) **EUROPEAN PATENT APPLICATION**
published in accordance with Art. 158(3) EPC

(43) Date of publication:
07.06.2006 Bulletin 2006/23

(51) Int Cl.:
*G11B 7/005* (2000.01)   *G11B 7/007* (1985.01)

(21) Application number: 04772449.7

(22) Date of filing: 30.08.2004

(86) International application number:
PCT/JP2004/012493

(87) International publication number:
WO 2005/029475 (31.03.2005 Gazette 2005/13)

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 19.09.2003  JP 2003327438
12.12.2003  JP 2003415540

(71) Applicant: Ricoh Company, Ltd.
Tokyo 143-8555 (JP)

(72) Inventor: KUROBE, Shinichi
Yokohama-shi,
Kanagawa 245-0063 (JP)

(74) Representative: Mounteney, Simon James
Marks & Clerk
90 Long Acre
London WC2E 9RA (GB)

(54) **WOBBLE SIGNAL DEMODULATING METHOD, WOBBLE SIGNAL DEMODULATING CIRCUIT, AND OPTICAL DISK DEVICE**

(57)    [PROBLEM] In order to provide a wobble signal demodulating method for demodulating a wobble signal obtained from reflected light reflected from a recording surface of an optical disk at a high accuracy, a frequency component at least exceeding 1/5 of a basic frequency of the wobble signal Swb is extracted from the wobble signal, and phase demodulation of a phase modulation wave part is carried out based on the frequency component and a clock signal generated from the carrier wave part. Thereby, when a low frequency noise is removed from the wobble signal, the frequency component at least exceeding 1/5 times the basic frequency still remains. As a result, it is possible to suppress signal degradation in the phase modulated wave part. Accordingly, it is possible to properly recognize a phase change position in the phase modulated wave part, and as a result, it is possible to accurately demodulate the wobble signal.

## Description

TECHNICAL FIELD

The present invention relates to a wobble signal demodulating method, a wobble signal demodulating circuit and an optical disk apparatus, and, in further detail, to a wobble signal demodulating method, a wobble signal demodulating circuit and an optical disk apparatus including the wobble signal demodulating circuit, in which a wobble signal obtained based on reflected light reflected from a recording surface of an optical disk is demodulated.

BACKGROUND ART

Recently, a function of a personal computer improves, and thus, it can handle information such as a music, a movie, a photograph or such (referred to as 'contents', hereinafter). Since these contents have a large information size, a DVD (digital versatile disk) has taken an attention to be applied to record them, which disk has the same diameter as that of a CD (compact disk) but has a recording capacity such that a size of information approximately seven times that which can be recorded in the CD can be recorded in the DVD. Also, the cost of the DVD has been lowering. Therefore, an optical disk apparatus handling the DVD as an information recording medium is applied as one of a peripheral apparatus of a personal computer.

Further, the contents can be modified with the use of a personal computer. For example, various scenes taken with the use of a handy recording device may be coupled together, or replacement thereamong may be carried out easily. In such a case, additional recording to the DVD is frequently carried out. When additional recording is carried out, it is important to determine a recording start position appropriately so as to positively avoid already recorded data from being destroyed from the DVD.

For example, in a DVD+R (DVD+recordable) which is a write-once-read-many optical disk or a DVD+RW (DVD+rewritable) which is a rewritable optical disk, a track for recording information is previously caused to wobble at a time of manufacture, and thus, information corresponding to positional information (address information) of the track is recorded as a result of the wobbling shape being phase-modulated. Hereinbelow, for the purpose of simplification, the DVD+R and the DVD+RW are generally referred to as 'DVD+system'. In an optical disk apparatus handling the DVD+system, a wobble signal is detected from the wobbling shape based on reflected light reflected from the track, phase demodulating is carried out thereon, and thus, the positional information or such of the track is obtained. Then, based on the thus-obtained positional information, the recording start position is determined.

A demand for an increase of a recording speed has been increasing along with popularization of the DVD. However, it is necessary to remove or fully reduce a noise from reflected light reflected from the track further accurately for the purpose of maintaining an accuracy of the phase demodulation of the wobble signal, as the recording speed further increases.

For example, Patent Document 1 proposes an optical disk apparatus in which a band deviation is compensated in a PLL (phase locked loop) circuit provided for generating a reference clock signal from the wobble signal, for example. However, in this optical disk apparatus, a correction can be carried out for a frequency fluctuation of the wobble signal to some extent. However, an influence of a noise is hardly considered there. Therefore, when the recording speed increases, the phase demodulation accuracy may degrade.

Further, a video deck which is an apparatus for recording a TV program or such in a magnetic tape is being replaced by a DVD video recorder applying, as a recording medium, the DVD in which a remarkably long hours of information can be recorded. Then, the recording speed of the DVD may further increase along with increase in an image quality.

Patent Document 1:
Japanese Laid-open Patent Application No. 11-203681

DISCLOSURE OF THE INVENTION

PROBLEM TO BE SOLVED BY THE INVENTION

The present invention has been devised in consideration of such a situation, and, a first object of the present invention is to provide a wobble signal demodulating method and a wobble signal demodulating circuit by which a wobble signal obtained based on reflected light reflected from a recording surface of an optical disk is demodulated with a high accuracy.

A second object of the present invention is to provide an optical disk apparatus by which recording can be carried out at a high speed with a superior recording quality

MEANS TO SOLVE THE PROBLEM

The present invention claimed in claim 1 is a wobble signal demodulating method for demodulating a wobble signal, obtained from reflected light reflected from a recording surface of an optical disk having a wobbling track produced thereon, including a carrier wave part having a predetermined basic frequency and a phase modulated wave part having predetermined information added thereto, which includes: a first step of extracting, from the wobble signal, a frequency component at least exceeding 1/5 times the basic frequency; and a second step of carrying out phase demodulation of the phase modulated wave part, based on the thus-extracted frequency component and a clock signal generated from the carrier wave part.

In this method, the frequency component, of the wobble signal obtained from the reflected light from the recording surface of the optical disk, at least exceeding 1/5 times the basic frequency is extracted in the first step; and phase demodulation of the phase modulated wave part is carried out based on the thus-extracted frequency component and the clock signal generated from the carrier wave part is carried out in the second step. In this case, when a low frequency noise is removed from the wobble signal for example, the frequency component at least exceeding 1/5 times the basic frequency still remains as it is in the signal on which the phase demodulation is to be carried out. As a result, it is possible to suppress signal degradation in the phase modulated wave part. Accordingly, it is possible to properly recognize a phase change position in the phase modulated wave part, and as a result, it is possible to accurately demodulate the wobble signal obtained based on the reflected light from the recording surface of the optical disk.

The present invention claimed in claim 2 is a wobble signal demodulating method for demodulating a wobble signal, obtained from reflected light reflected from a recording surface of an optical disk having a wobbling track produced thereon, including a carrier wave part having a predetermined basic frequency and a phase modulated wave part having predetermined information added thereto, which includes: a first step of extracting, from the wobble signal, a frequency component lower than a specific frequency falling within a frequency range between 1.7 times and 3 times the basic frequency; and a second step of carrying out phase demodulation of the phase modulated wave part, based on the thus-extracted frequency component and the clock signal generated from the carrier wave part.

In this method, the frequency component, of the wobble signal obtained from the reflected light from the recording surface of the optical disk, lower than the specific frequency falling within the frequency range between 1.7 times and 3 times the basic frequency is extracted in the first step; and phase demodulation of the phase modulated wave part is carried out based on the thus-extracted frequency component and the clock signal generated from the carrier wave part. In this case, when a high frequency noise is removed from the wobble signal for example, the frequency component lower than the specific frequency falling within the frequency range between 1.7 times and 3 times the basic frequency still remains as it is in the signal on which the phase demodulation is to be carried out. As a result, it is possible to suppress signal degradation in the phase modulated wave part. Accordingly, it is possible to properly recognize a phase change position in the phase modulated wave part, and as a result, it is possible to accurately demodulate the wobble signal obtained based on the reflected light from the recording surface of the optical disk.

The present invention claimed in claim 5 is a wobble signal demodulating circuit for demodulating a wobble signal, obtained from reflected light reflected from a recording surface of an optical disk having a wobbling track produced thereon, including a carrier wave part having a predetermined basic frequency and a phase modulated wave part having predetermined information added thereto, which includes: a high pass filter circuit allowing a frequency component at least exceeding 1/5 times the basic frequency to pass therethrough; and a phase demodulating circuit configured to carry out phase demodulation of the phase modulated wave part, based on an output signal of the high pass filter circuit and a clock signal generated from the carrier wave part.

In this circuit, the frequency component, of the wobble signal obtained from the reflected light from the recording surface of the optical disk, at least exceeding 1/5 times the basic frequency is passed through the high pass filter circuit. Then, the phase demodulating circuit carries out phase demodulation of the phase modulated wave part, based on the output signal of the high pass filter circuit and the clock signal generated from the carrier wave part. In this case, when a low frequency noise is removed from the wobble signal by the high pass filter circuit for example, the frequency component at least exceeding 1/5 times the basic frequency still remains as it is in the signal on which the phase demodulation is to be carried out. As a result, it is possible to suppress signal degradation in the phase modulated wave part. Accordingly, it is possible to properly recognize a phase change position in the phase modulated wave part, and as a result, it is possible to accurately demodulate the wobble signal obtained based on the reflected light from the recording surface of the optical disk.

In this case, as in a wobble signal demodulating circuit claimed in claim 6, a cut-off frequency of the high pass filter circuit may be a frequency equal to or lower than 1/5 times the basic frequency.

Also, in this case, as in a wobble signal demodulating circuit claimed in claim 7, a high pass filter cut-off frequency setting circuit configured to set the cut-off frequency of the high pass filter circuit based on the basic frequency may be further provided.

The present invention claimed in claim 8 is a wobble signal demodulating circuit for demodulating a wobble signal, obtained from reflected light reflected from a recording surface of an optical disk having a wobbling track produced thereon, including a carrier wave part having a predetermined basic frequency and a phase modulated wave part having predetermined information added thereto, which includes: a low pass filter circuit allowing a frequency component lower than a specific frequency falling within a frequency range between 1.7 times and 3 times the basic frequency to pass therethrough; and a phase demodulating circuit configured to carry out phase demodulation of the phase modulated wave part, based on an output signal of the low pass filer circuit and a clock signal generated from the carrier wave part.

In this circuit, the frequency component, of the wobble signal obtained from the reflected light from the recording surface of the optical disk, lower than the specific frequency falling within the frequency range between 1.7 times and 3 times the basic frequency is passed through the low pass filter circuit. Then, the phase demodulating circuit carries out phase demodulation of the phase modulated wave part, based on the output signal of the low pass filer circuit and the clock signal generated from the carrier wave part. In this case, when a high frequency noise is removed from the wobble signal by means of the low pass filter circuit for example, the frequency component lower than the specific frequency falling within the frequency range between 1.7 times and 3 times the basic frequency still remains as it is in the signal on which the phase demodulation is to be carried out. As a result, it is possible to suppress signal degradation in the phase modulated wave part. Accordingly, it is possible to properly recognize a phase change position in the phase modulated wave part, and as a result, it is possible to accurately demodulate the wobble signal obtained based on the reflected light from the recording surface of the optical disk.

In this case, as in a wobble signal demodulating circuit claimed in claim 9, a high pass filter circuit allowing a frequency at least exceeding 1/5 times the basic frequency to pass therethrough, may be further provided, and the low pass filter may allow a frequency component lower than the specific frequency included in an output signal of the high pas filter circuit to pass therethrough.

Also in this case, as in a wobble signal demodulating circuit claimed in claim 10, a cut-off frequency of the high pass filter circuit may be a frequency equal to or lower than 1/5 times the basic frequency.

Also in this case, as in a wobble signal demodulating circuit claimed in claim 11, a high pass filter cut-off frequency setting circuit configured to set the cut-off frequency of the high pass filter circuit based on the basic frequency may be further provided.

In the wobble signal demodulating circuit claimed in claim 8, as in a wobble signal demodulating circuit claimed in claim 12, a cut-off frequency of the low pass filer circuit may be equal to the specific frequency.

In this case, as in a wobble signal demodulating circuit claimed in claim 13, a low pass filter cut-off frequency setting circuit configured to set the cut-off frequency of the low pass filter circuit based on the basic frequency may be further provided.

In each of the above-mentioned wobble signal demodulating circuits claimed in claims 5 through 13, as in a wobble signal demodulating circuit claimed in claim 14, a basic frequency obtaining circuit configured to obtain the basic frequency from the wobble signal may be further provided. In this case, it is possible to stably demodulate the phase modulated wave part from the wobble signal with a high accuracy even when the basic frequency varies due to a fluctuation of a rotational speed of the optical disk.

The present invention claimed in claims 15, 16 is an optical disk apparatus carrying out at least recording data from among recording data in, reproducing data from and deleting data from an optical disk having a recording surface on which a wobbling track is produced, which includes the wobble signal demodulating circuit claimed in any one of claims 5 through 14; and a data recording part configured to determine a recording start position based on positional information of the track obtained from an output signal of the wobble signal demodulating circuit.

In this configuration, since the above-mentioned wobble signal demodulating circuit claimed in any one of claims 5 through 14 demodulates the wobble signal with synchronization with the clock signal generated from the carrier wave part with a high accuracy, it is possible to obtain the positional information from the output signal of the wobble signal demodulating circuit properly even when the recording speed is high. Accordingly, an address decoding circuit, a motor driver, an optical pickup and so forth included in the data recording part can determine the recording start position with a high accuracy, and as a result, recording can be carried out with a superior recording quality at a high speed.

In this case, as in the optical disk apparatus claimed in claim 14, the optical disk may be an optical disk conforming to a standard of DVD+R or DVD+RW.

ADVANTAGE OF THE INVENTION

In the wobble signal demodulating method and the wobble signal demodulating circuit according to the present invention, it is possible to demodulate the wobble signal obtained from the reflected light from the recording surface of the optical disk with a high accuracy. Further, in the optical apparatus according to the present invention, it is possible to carry out recording on the optical disk with a high quality at a high speed.

BRIEF DESCRIPTION OF THE DRAWINGS

FIG. 1 is a block diagram showing a configuration of an optical disk apparatus according to one embodiment of the present invention.

FIG. 2 illustrates a wobbling shape of a track on an optical disk.

FIG. 3 illustrates a configuration of an information frame.

FIG. 4 (A) and, FIG. 4 (B) illustrate a wobbling shape of an ADIP information part.

FIG. 5 (A) and FIG. 5 (B) illustrate a wobbling shape of a synchronization information part.

FIG. 6 illustrates a data bit of the ADIP information part.

FIG. 7 illustrates a configuration of an optical pickup device in FIG. 1.

FIG. 8 illustrates a configuration of a reproduced signal processing circuit of FIG. 1.

FIG. 9 illustrates a configuration of a clock signal generating circuit of FIG. 8.

FIG. 10 illustrates frequency response characteristics of a BPF of FIG. 9.

FIG. 11 is a block diagram illustrating a configuration of a demodulated signal generating circuit of FIG. 8.

FIG. 12 (A) illustrates frequency response characteristics of a HPF of FIG. 11; and FIG. 12 (B) illustrates frequency response characteristics of a LPF of FIG. 11.

FIG. 13 is a timing chart illustrating a function of the demodulated signal generating circuit of FIG. 11.

FIG. 14 (A) through FIG. 14 (C) illustrates influence of cut-off frequencies of the HPF and LPF of FIG. 11.

FIG. 15 is a waveform chart illustrating the wobble signal applied in a simulation.

FIG. 16 illustrates an influence of the cut-off frequency of the LPF on a signal level of the demodulated signal.

FIG. 17 illustrates an influence of the cut-off frequency of the HPF on a signal level of the demodulated signal.

FIG. 18 illustrates an influence of the cut-off frequency of the LPF on an index Q.

FIG. 19 illustrates an influence of the cut-off frequency of the HPF on the index Q.

FIG. 20 is a flow chart illustrating recording processing in an optical disk apparatus carried out in response to a recording request command from a host.

FIG. 21 is a flow chart illustrating reproducing processing in an optical disk apparatus carried out in response to a reproducing request command from the host.

FIG. 22 is a block diagram illustrating a configuration example different from the demodulated signal generating circuit of FIG. 11.

DESCRIPTION OF REFERENCE NUMERALS

10 carrier wave part
11 phase modulation wave part
12 wobble period
15 optical disk
20 optical disk apparatus
23 optical pickup device
27 motor driver
28g modulation signal generating circuit (wobble signal modulation circuit)
33 servo controller
40 CPU
fc1 lower pass filter cut-off frequency
fc2 high pass filter cut-off frequency
g1 high pass filter circuit
g2 low pass filter circuit
g3 multiplier (part of phase modulation circuit)
g4 integrating circuit (part of phase modulation circuit)
g5 sample hold circuit (part of phase modulation circuit)
g7 delay adjustment circuit (part of phase modulation circuit)
g8 sin wave generating circuit (part of phase modulation circuit)
Swb wobble signal

BEST MODE FOR CARRYING OUT THE INVENTION

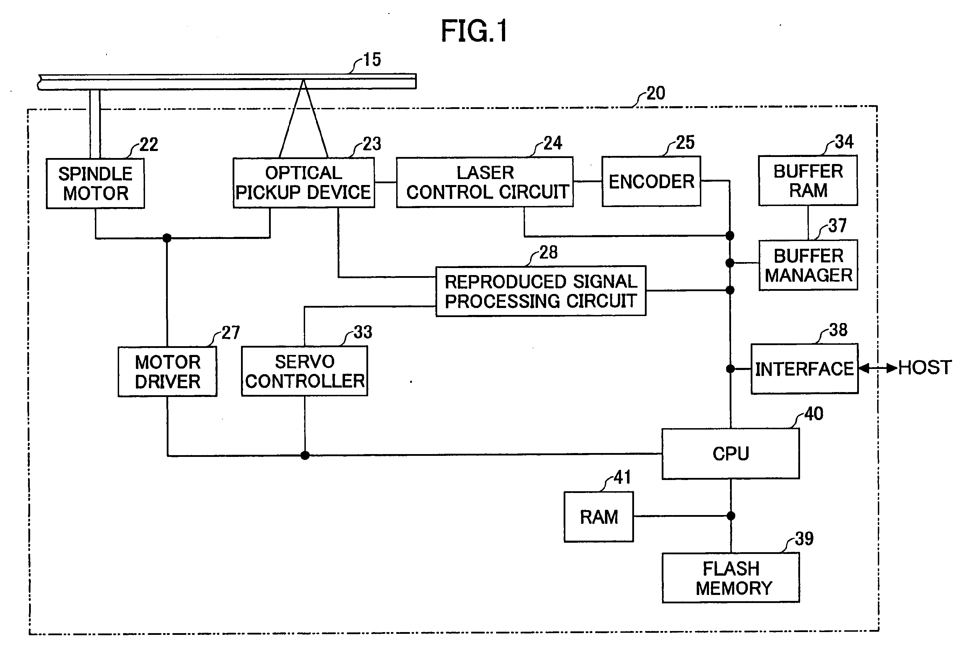

With reference to FIGS. 1 through 21, an optical disk apparatus 20 according to one embodiment of the present invention is described.

FIG. 1 shows the optical disk apparatus 20 according to the embodiment of the present invention.

The optical disk apparatus 20 shown in FIG. 1 includes a spindle motor 22 rotating and driving an optical disk 15; an optical pickup device 23, a laser control circuit 24, an encoder 25, a motor driver 27, a reproduced signal processing circuit 28, a servo controller 33, a buffer RAM 34, a buffer manager 37, an interface 38, a flash memory 39, a CPU 40 and a RAM 41. Connecting lines thereamong shown in FIG. 1 merely represent flows of typical information and signals, and do not necessarily show all the connection relationships among the respective blocks. In the embodiment, an information recording medium conforming to a DVD+R standard is applied as the optical disk 15, for example.

A spiral groove (represented by a symbol G) acting as a guide groove is produced on a recording surface of the optical disk 15. Generally speaking, in such an optical disk, a part projecting toward a direction from which laser light is applied is referred to as a groove while a part depressed is referred to as a land (L). There, the groove G acts as a track for recording information, and thus, data is recorded in the groove G.

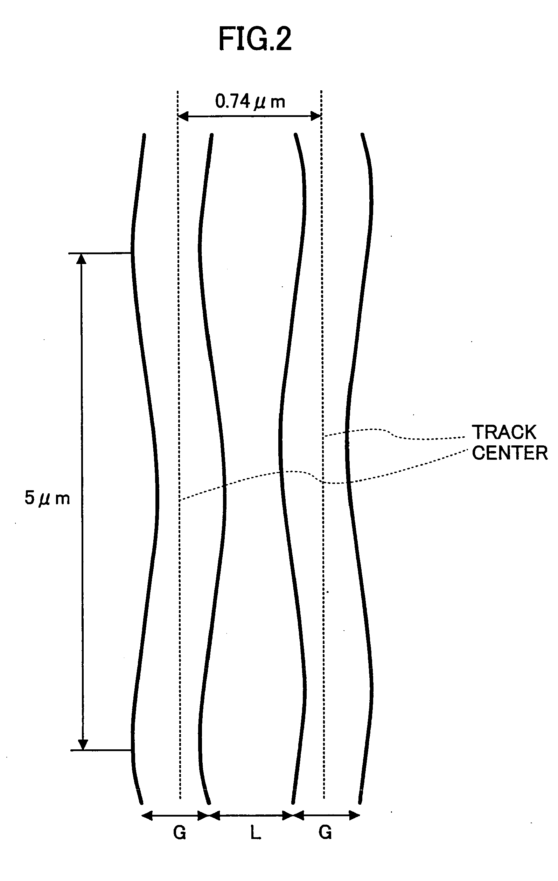

The groove G wobbles, for example, as shown in FIG. 2.

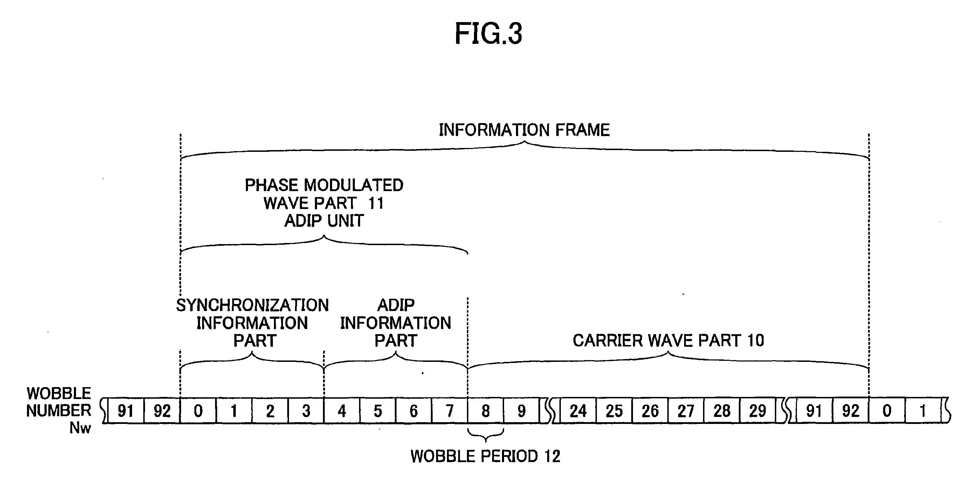

According to the standard of DVD+R, a wobbling shape of the track is determined by an ADIP (address in pre-groove) unit and a carrier wave. The ADIP unit includes various information. Further, the carrier wave is used for generating a reference clock signal or such. According to the present embodiment, a basic unit made of the ADIP unit and the carrier wave is referred to as an information frame. Further, the part of the carrier wave of the information frame is referred to as a carrier wave part. A size of one information frame is of 93 wobbles (wobble numbers of Nw = 0 through 92), assuming that one period of the carrier wave (which may be referred to as a wobble period) is regarded as one wobble, as shown in FIG. 3. The wobble numbers Nw = 0 through 7 correspond to the ADIP unit, while the wobble numbers Nw = 8 through 92 correspond to the carrier wave part. The ADIP unit in a data zone which is a zone to record data includes a zone including synchronization information (referred to as a 'synchronization information part', hereinafter) and a zone including address information (referred to as a 'ADIP information part'). In this case, the wobble numbers 0 through 3 corresponded to the synchronization part while the wobble numbers 4 through 7 correspond to the ADIP information part. That is, a size of the synchronization information part is four wobbles, while a size of the ADIP information part is also four wobbles. Each of these information parts is a phase modulated (PSK: phase shift keying) wave part.

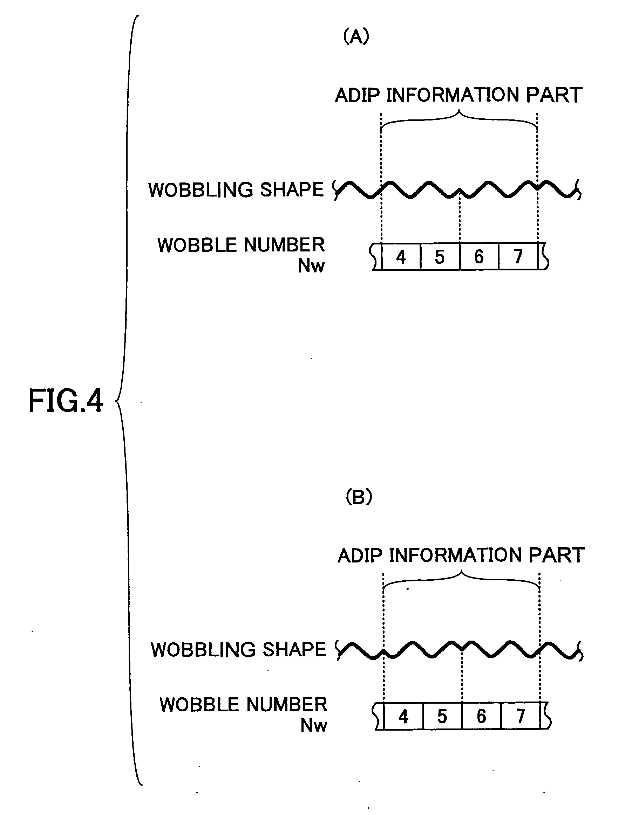

The ADIP information part indicates one bit of data by four wobbles. When the data is '0', the advancing two wobbles are made in phase with the carrier wave part, while the subsequent two wobbles are made opposite in phase to the carrier wave part, as shown in FIG. 4 (A). On the other hand, when the data is '1', the advancing two wobble are made opposite in phase to the carrier wave part while the subsequent two wobbles are made in phase with the carrier wave part as shown in FIG. 4 (B). In order to obtain address data, 51 bits of the data is required.

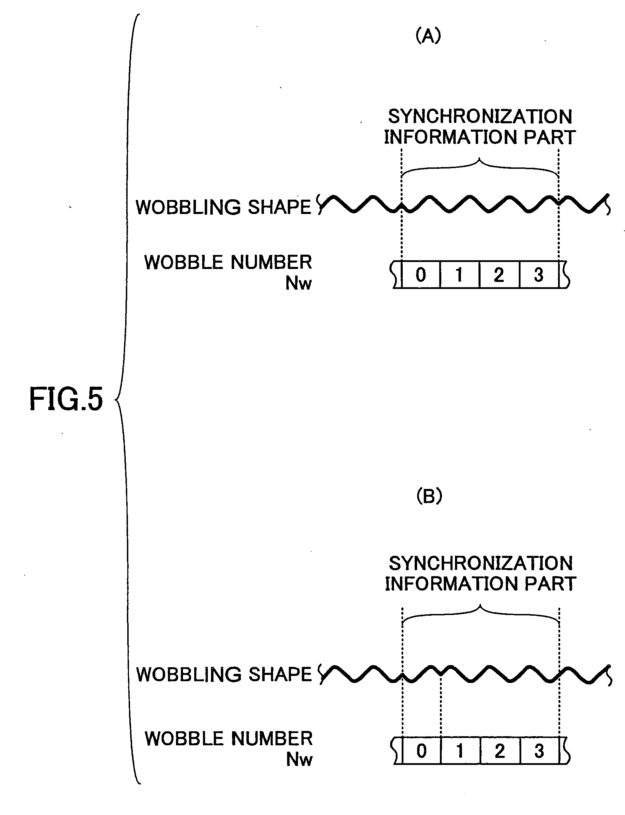

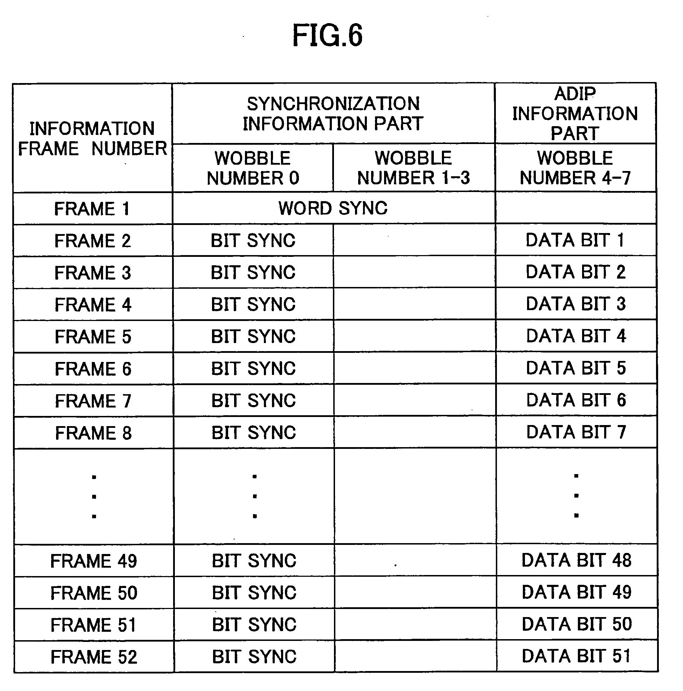

When a top bit of data is stored in the ADIP information part in the subsequent information frame, the synchronization information part has word synchronization (word sync) information, that is, all the four wobbles are made opposite in phase to the carrier wave part as shown in FIG. 5 (A). When data is stored in the ADIP information part, bit synchronization (bit sync) information is set, that is, the top wobble is made opposite in phase to the carrier wave part while the remaining three wobbles are made in phase with the carrier wave part as shown in FIG. 5 (B). That is, as shown in FIG. 6, one set of address data is obtained from 52 information frames.

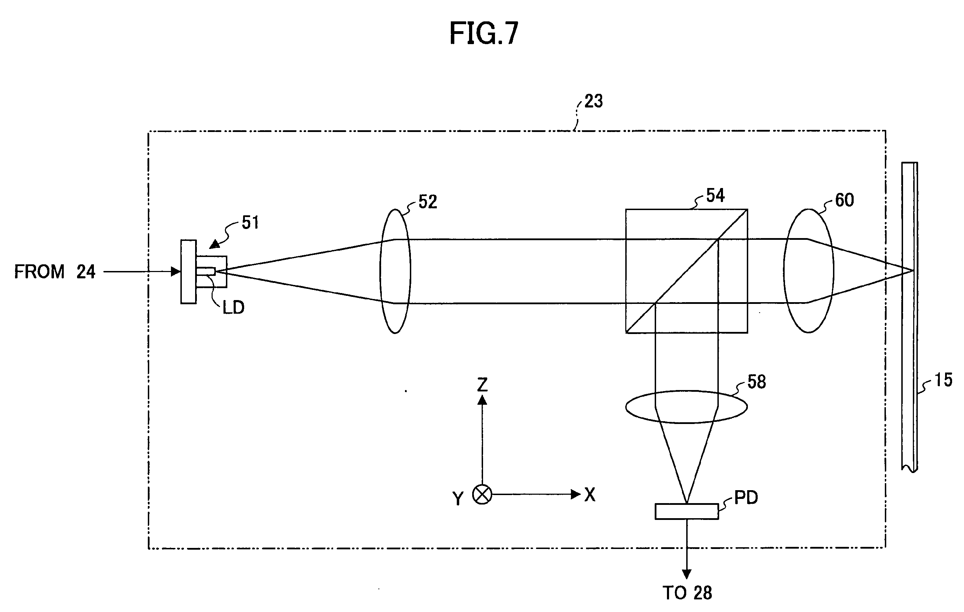

The above-mentioned optical pickup device 23 applies laser light to the recording surface of the optical disk 15 on which the above-mentioned track is produced, and also, receives reflected light from the recording surface of the optical disk 15. This optical pickup device 23 includes, for example, as shown in FIG. 7, a light source unit 51, a collimator lens 52, a beam splitter 54, an objective lens 60, a detection lens 58, a light receiving device PD and a driving system (a focusing actuator, a tracking actuator and a seek motor, not shown).

The above-mentioned light source unit 51 includes a semiconductor laser acting as a light source emitting laser light of a wavelength of 660 nm. In the present embodiment, a maximum intensity outgoing direction of a beam of laser light emitted from the light source unit 51 is assumed as being a +X direction.

The above-mentioned collimator lens 52 is disposed on the +X side of the light source unit 51, and transforms the light beam emitted from the light source unit 51 into approximately parallel light.

The above-mentioned beam splitter 54 is disposed on the +X side of the collimator lens 52, and transmits the light beam thus transformed into the parallel light by the collimator lens 52, as it is. The beam splitter 54 also causes a light beam (returning light beam) incident thereto through the above-mentioned objective lens 60 after being reflected by the optical disk 15, to branch off in a -Z direction:

The objective lens is disposed on the +X side of the beam splitter 54, and condenses the light beam transmitted by the beam splitter 54.

The detection lens 58 is disposed on the - Z side of the beam splitter 54, and condenses the returning light beam having branched off by means of the beam splitter 54, in the -Z direction onto a light receiving surface of the light receiving device PD. The light receiving device PD includes a plurality of light receiving elements, and, generates and outputs wobble signal information, reproduced data information, focus error information and track error information, to the reproduced signal processing circuit 28.

The above-mentioned focusing actuator (not shown) is an actuator to slightly drive the objective lens 60 in a focus direction (in this case, the X-axis direction) which is an optical axis direction of the objective lens 60.

The above-mentioned tracking actuator (not shown) is an actuator to slightly drive the objective lens 60 in a tracking direction (in this case, the Z-axis direction) perpendicular to a tangential direction of the track.

The seek motor (not shown) is a motor to drive the optical pickup device itself in a sledge direction (in this example, the Z-axis direction).

Returning to FIG. 1, the above-mentioned flash memory 39 includes a program zone and a data zone. In the program zone, a program described in a code interpretable by the CPU 40 is stored. In the data zone, information concerning light emission characteristics of the semiconductor laser LD, information concerning seek operation of the optical pickup device 23 (referred to as 'seek information', hereinafter) and recording requirement information are stored.

The buffer RAM 34 includes a buffer zone in which data to record in the optical disk 15 (recording data) and data reproduced from the optical disk (reproduced data) are temporarily stored, and a variable zone in which various program variables are stored.

The buffer manager 37 manages input/output of data in/from the buffer RAM 34. The buffer manager 37 notifies the CPU 40 when a data amount stored in the buffer area of the buffer RAM 34 has reached a predetermined amount.

The above-mentioned interface 38 is a bidirectional communication interface with a host (for example, a personal computer) and, for example, conforms to an ATAPI (AT attachment packet interface).

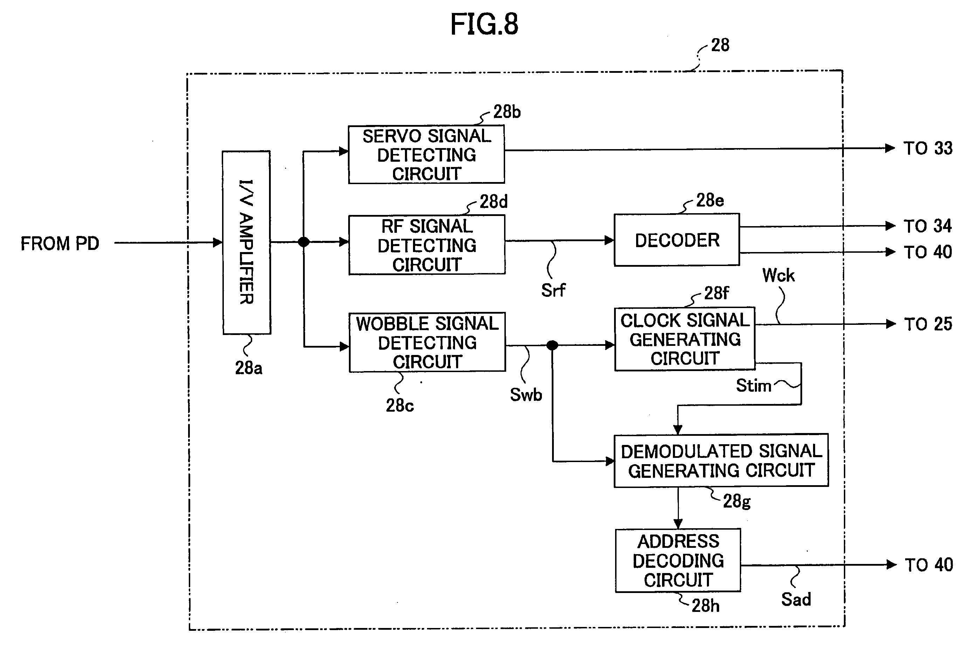

The above-mentioned reproduced signal processing circuit 28 includes, as shown in FIG. 8, an I/V amplifier 28a, a servo signal detecting circuit 28b, a wobble signal detecting circuit 28c, an RF signal detecting circuit 28d, a decoder 28e, a clock signal generating circuit 28f, a demodulated signal generating circuit 28g acting as a wobble signal demodulating circuit, and an address decoding circuit 28h.

The above-mentioned I/V amplifier 28a converts a current signal from the light receiving device PD into a voltage signal, and also, amplifies it by a predetermined gain. The servo signal detecting circuit 28b detects a servo signal (a focus error signal, a track error signal or such) based on an output signal of the I/V amplifier 28a. The thus-detected servo signal is output to the servo controller 33. The RF signal detecting circuit 28d detects an RF signal (represented by Srf) based on the output signal of the I/V amplifier 28a. The thus-detected RF signal Srf is output to the decoder 28e.

The decoder 28e carries out decoding processing and error detecting processing on the RF signal Srf, and, when an error is detected, the decoder 28e carries out error correction processing. After that, the thus-processed data is stored in the buffer RAM 34 via the buffer manager 37 as reproduced data. The RF signal includes address data, and the decoder 28e outputs the address data extracted from the RF signal, to the CPU 40.

The above-mentioned wobble signal detecting circuit 28c detects a wobble signal (represented by Swb) based on the output signal of the I/V amplifier 28a. The wobble signal Swb is output to the clock signal generating circuit 28f and to the demodulated signal generating circuit 28g.

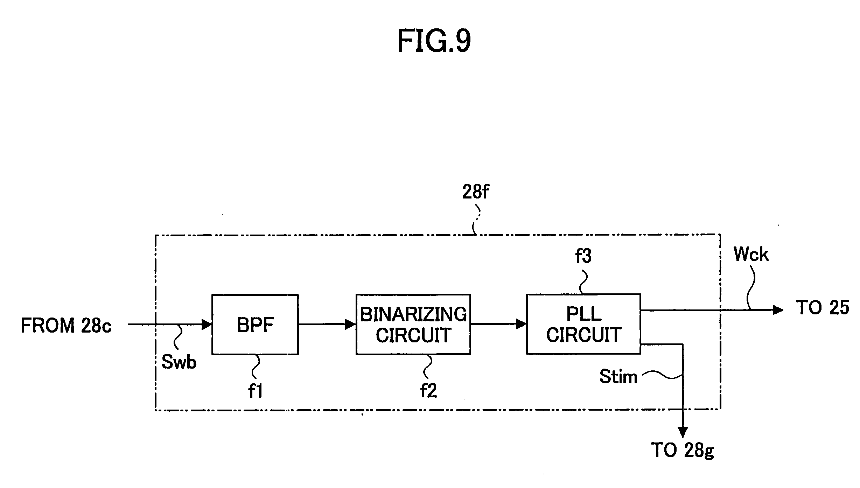

The clock signal generating circuit 28f generates a reference clock signal (represented by Wck) and a timing clock signal (represented by Stim) based on the wobble signal Swb. The clock signal generating circuit 28f includes, as shown in FIG. 9 for example, a band pass filter (BPF) f1, a binarizing circuit f2 and a PLL (phase locked loop) circuit f3.

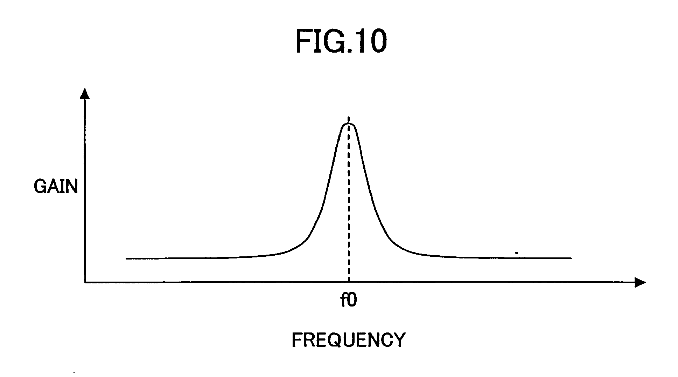

The above-mentioned band pass filter f1 is, as shown in FIG. 10 for example, a narrow-band band pass filter, and has frequency response characteristics such that its gain may have a peak in the vicinity of a frequency (basic frequency) f0 of a carrier wave component of the wobble signal Swb. Thereby, the wobble signal Swb is extracted from the carrier wave component.

Returning to FIG. 9, the above-mentioned binarizing circuit f2 binarizes the output signal of the band pass filter f1.

The above-mentioned PLL circuit f3 synchronizes with the output signal of the binarizing circuit f2, and generates the reference clock signal Wck and the timing clock signal Stim. There, a period of the reference clock signal Wck is 1/32 times the period of the wobble signal Swb. A period of the timing clock signal Stim is the same as that of the wobble signal Swb. The reference clock signal Wck and the timing clock signal Stim are locked by the PLL circuit f3, and thus, are stably output. The thus-generated reference clock signal Wck is output to the encoder 25, and the timing clock signal Stim is output to the demodulated signal generating circuit 28g.

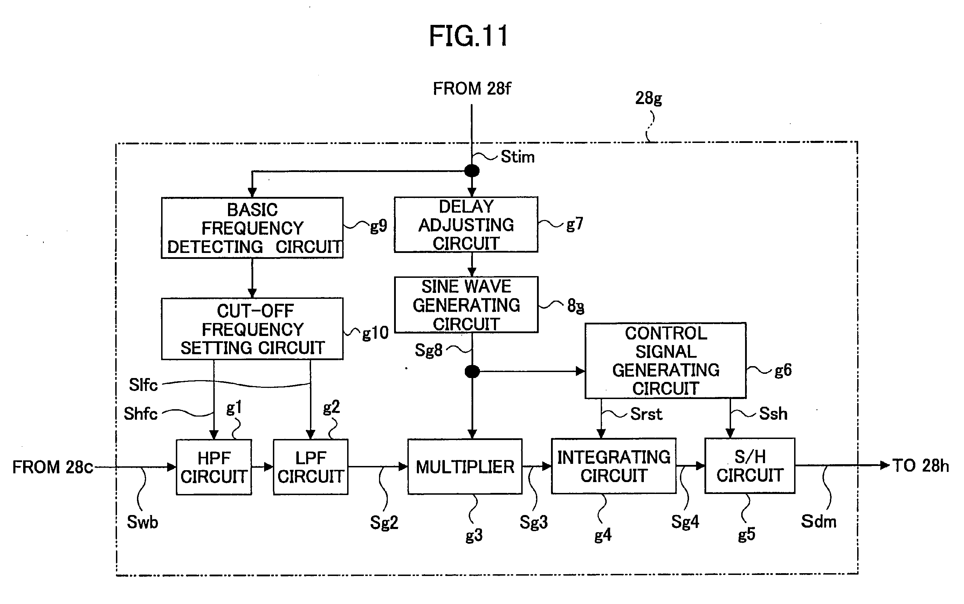

Returning to FIG. 8, the above-mentioned demodulated signal generating circuit 28g synchronizes with the timing clock signal Stim, demodulates a part of the wobble signal Swb corresponding to the ADIP unit, and generates a demodulated signal. The thus-generated demodulated signal is output to the address decoding circuit 28h. There, the demodulated signal generating circuit 28g has, as shown in FIG. 11 for example, a high pass filter (HPF) circuit g1, a low pass filter (LPF) circuit g2, a multiplier g3, an integrating circuit g4, a sample and hold circuit (S/H circuit) g5, a delay adjusting circuit g7, a sine wave generating circuit g8 (a phase demodulating part being made of the above-mentioned multiplier g3 through the sine wave generating circuit g8), a control signal generating circuit g6, a basic frequency detecting circuit g8 and a cut-off frequency setting circuit g10.

The above-mentioned basic frequency detecting circuit g9 detects the above-mentioned basic frequency f0 based on the timing clock signal Stim. A signal including information concerning the thus-detected basic frequency f0 is output to the cut-off frequency setting circuit g10.

The cut-off frequency setting circuit g10 sets a cut-off frequency (represented by fc1 (< f0)) of the high pass filter circuit g1 and a cut-off frequency (represented by fc2 (> f0)) of the low pass filter circuit g2, based on the signal including the information concerning the basic frequency f0. A signal including information concerning the thus-set cut-off frequency fc1 is output to the high pass filter circuit g1 as a cut-off setting signal Shfc, Similarly, a signal including information concerning the thus-set cut-off frequency fc2 is output to the low pass filter circuit g2 as a cut-off setting signal Slfc. The details of the respective cut-off frequencies are described later.

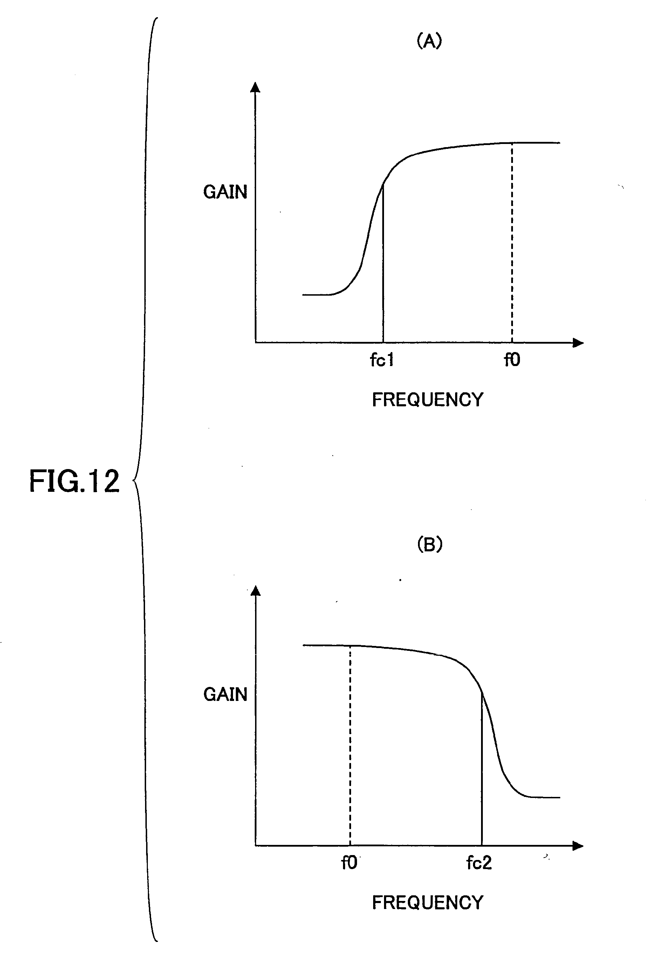

As shown in FIG. 12 (A) for example, the high pass filter circuit g1 allows a frequency component including a part of the wobble signal Swb exceeding the cut-off frequency fc1 to pass therethrough, and reduces a signal level of a frequency component equal to or less than the cut-off frequency fc1. That is, the high pass filter circuit g1 reduces a low frequency noise component included in the wobble signal Swb. A factor of the low frequency noise is a servo error in the focus control or tracking control, a variation in a substrate thickness of the optical disk, crosstalk (unnecessary leak) from an adjacent track or such.

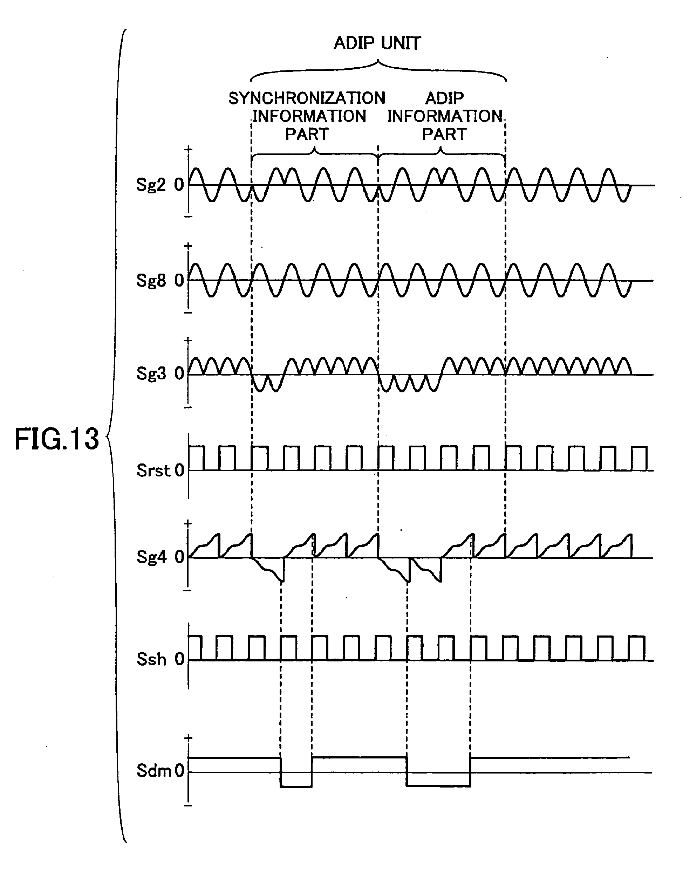

As shown in FIG. 12 (B) for example, the low pass filter circuit g2 allows a frequency component including a part of an output signal of the high pass filter g1 lower than the cut-off frequency fc2 to pass therethrough, and reduces a signal level of a frequency component equal to or higher than the cut-off frequency fc2. That is, the low pass filter circuit g2 reduces a high frequency noise component included in the output signal of the high pass filter g1. Accordingly, an output signal Sg2 of the low pass filter g2 is a signal from which the low frequency noise and the high frequency noise included in the wobble signal Swb have been thus reduced respectively (see the signal Sg2 in FIG. 13). A factor of the high frequency noise is superposition of the RF signal, power fluctuation in pulse light emission, a noise generated by some circuit, a noise generated by the semiconductor laser LD or such.

The delay adjusting circuit g7 delays the timing clock signal Stim in consideration of a signal delay in the clock signal generating circuit 28f. The timing clock signal Stim thus delayed in the delay adjusting circuit g7 is output to the sine wave generating circuit g8. Thereby, a phase of the output signal Sg2 of the low pass filter g2 and a phase of an output signal Sg8 of the sine wave generating circuit g8 are made approximately coincident therebetween as shown in FIG. 13 for example.

FIG. 13 shows waveforms of the respective signals for a case where the above-mentioned bit synchronization information is set in the synchronization information part, and data '1' is set in the ADIP information.

The sine wave generating circuit g8 extracts a start timing from the timing clock signal Stim delayed in the delay adjusting circuit g7, and generates the sine wave signal Sg8 having a frequency the same as that of the timing clock signal Stim (see the signal Sg8 of FIG. 13). The thus-generated sine wave Sg8 is output to the multiplier g3 and the control signal generating circuit g6. The sine wave signal Sg8 may be generated with the use of sine wave data (digital data) stored in a memory (not shown) provided in the sine wave generating circuit g8.

The above-mentioned multiplier g3 multiplies the output signal Sg2 of the low pass filter g2 with the sine wave signal Sg8, and generates a signal Sg3. The thus-generated signal Sg3 becomes a positive signal when the signal Sg2 and the signal Sg8 are in phase with one another, or becomes a negative signal when the signal Sg2 and the signal Sg8 are opposite in phase to one another (see FIG. 13, the signal Sg3).

The control signal generating circuit g6 generates a reset signal Srst for resetting the integrating circuit g4, and generates a sampling signal Ssh indicating sampling timing to the sample and hold circuit g5. There, as the reset signal Srst, a pulse signal in synchronization with a start timing of each period of the sine wave signal Sg8 is output (see FIG. 13, the signal Srst). Further, as the sampling signal Ssh, since sampling should be carried out before the integrating circuit g4 is reset, a pulse signal having a rising edge occurring somewhat earlier than the reset signal Srst is output (see FIG. 13, the signal Ssh). The thus-generated reset signal Srst is output to the integrating circuit g4, and the sampling signal Ssh is output to the sample and hold circuit g5.

The integrating circuit g4 is reset by a rising edge of the reset signal Srst from the control signal generating circuit g6, and integrates the output signal Sg3 of the multiplier g3 every period of the sine wave signal Sg8 (see FIG. 13, the signal Sg4).

The sample and hold circuit g5 carries out sampling from the output signal Sg4 of the integrating circuit g4 in synchronization with the sampling signal Ssh from the control signal generating circuit g6. There, the sampling from the signal Sg4 is carried out at a timing of a rising edge of the sampling signal Ssh (see FIG. 13, a signal Sdm). A signal from the sample and hold circuit g5 is output to the decoding circuit 28h as a demodulated signal Sdm.

Returning to FIG. 8, the above-mentioned address decoding circuit 28h monitors a part of the demodulated signal corresponding to the synchronization information part (referred to as a 'synchronization information signal' for the sake of simplification, hereinafter), and, when detecting the synchronization information signal, the address decoding part 28h extracts a part corresponding to the ADIP information part (referred to as an 'ADIP information signal', hereinafter for the sake of simplification). The address decoding circuit 28h obtains address data by decoding the respective ADIP information signals when the thus-extracted ADIP information signals amount to a predetermined amount (in this case, an amount corresponding to 51 bits). The thus-obtained decoded address data is output as an address signal Sad to the CPU 40.

Returning to FIG. 1, the servo controller 33 generates a focus control signal for correcting a focus error based on the focus error signal from the servo signal detecting circuit 28b, and also, generates a tracking control signal for correcting a tracking error based on the track error signal. The respective control signals thus generated are output to the motor driver 27 at a time of a servo-on mode, while they are not output at a time of a servo-off mode. The servo-on mode and the servo-off mode are set by the CPU 40.

The motor driver 27 outputs a driving signal for the above-mentioned focusing actuator based on the above-mentioned focus control signal to the optical pickup device 23, and outputs a driving signal for the above-mentioned tracking actuator based on the above-mentioned tracking control signal to the optical pickup device 23. That is, the servo signal detecting circuit 28b, the servo controller 33 and the motor driver 27 carry out the tracking control and the focusing control. Further, the motor driver 27 outputs driving signals for the spindle motor 22 and the seek motor respectively based on control signals from the CPU 40.

The above-mentioned encoder 25 takes the recording data stored in the buffer RAM 34 via the buffer manager 37, carries out data modulation, adds error correction code and so fourth, and generates a writing signal for the optical disk 15. The thus-generated writing signal is output to the laser control circuit 24 together with the above-mentioned reference clock signal Wck.

The laser control circuit 24 controls power of laser light applied to the optical disk 15. For example, when recording is carried out, recording requirements, semiconductor laser light emission characteristics, the writing signal and the reference clock signal Wck from'the encoder 25 and so forth are used to generate a driving signal for the semiconductor laser LD.

The CPU 40 controls operation of the above-mentioned respective parts, according to the program stored in the program zone of the flash memory 39, and also, stores data required for control operation in the variable zone of the buffer RAM 34 or in the RAM 41.

The above-mentioned cut-off frequency fc1 and the cut-off frequency fc2 set by the cut-off frequency setting circuit g10 are described next.

A demodulation accuracy required when the phase modulated wave part is demodulated is greatly affected by a signal waveform and a signal level of the phase modulated wave part. The signal waveform and the signal level of the phase modulated wave part vary according to the cut-off frequency of each filter circuit. That is, the cut-off frequency of each filter circuit influences the demodulation accuracy.

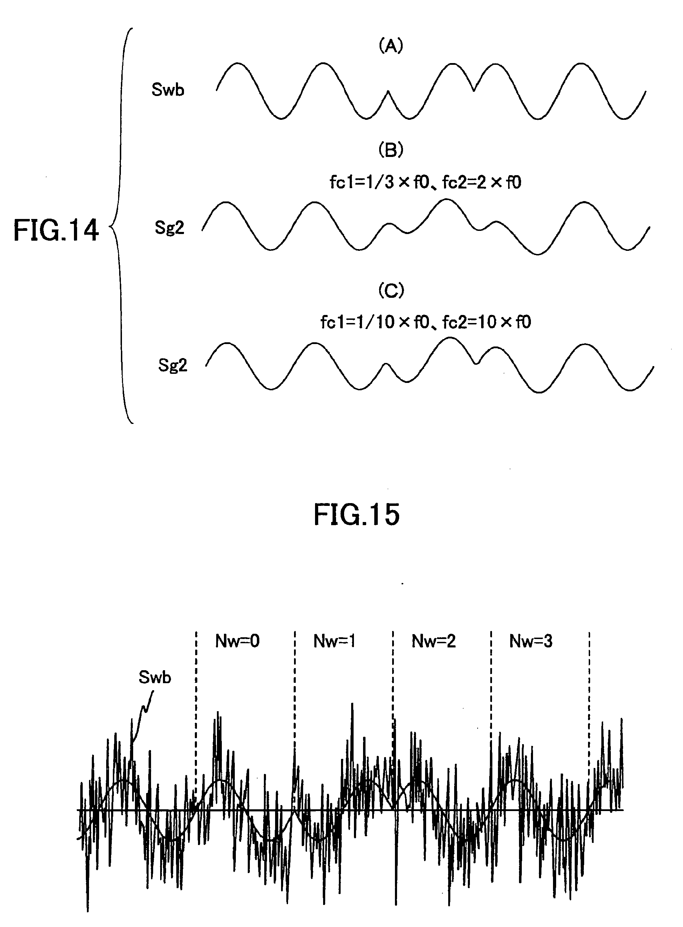

According to a simulation by a computer, the output signal Sg2 of the low pass filter g2 becomes such that a phase inversion position is not clear, as shown in FIG. 14 (B) as one example, when the wobble signal Swb (no noise is considered in this case) such as that shown in FIG. 14 (A) is input, in a case where the number of order of each filter is quadratic, and 'fc1 = 1/3 × f0', and 'fc2 = 2 × f0'. Further, the output signal Sg2 of the low pass filter g2 becomes such that a phase inversion position is clear, as shown in FIG. 14 (C) as one example, in a case where the number of order of each filter is quadratic, and 'fc1 = 1/10 × f0', and 'fc2 = 10 × f0' .

Further, a computer simulation has been carried out for an influence of the cut-off frequency fc1 and the cut-off frequency fc2 on a signal level of the demodulated signal Sdm for a case where, as shown in FIG. 15 as one example, the wobble signal Swb in which a noise component is added to an ideal wobble signal is input to the demodulated signal generating circuit 28g. There, as one example, a frequency, an amplitude, a level and so forth are set based on a random number generated according to a Gaussian distribution. It is noted that the noise component is set in such a manner that, in four wobbles of Nw = 0 through 3, an average of the amplitude may be 0, and an average of the level may be 1 (the same as those of the ideal wobble signal). Further, a band of the noise component is limited in such a manner that the frequency may be equal to or lower than 20 × f0. Furthermore, for the sake of simplification, each of the high pass filter circuit g1 and the low pass filter circuit g2 is assumed as being a quadratic filter circuit.

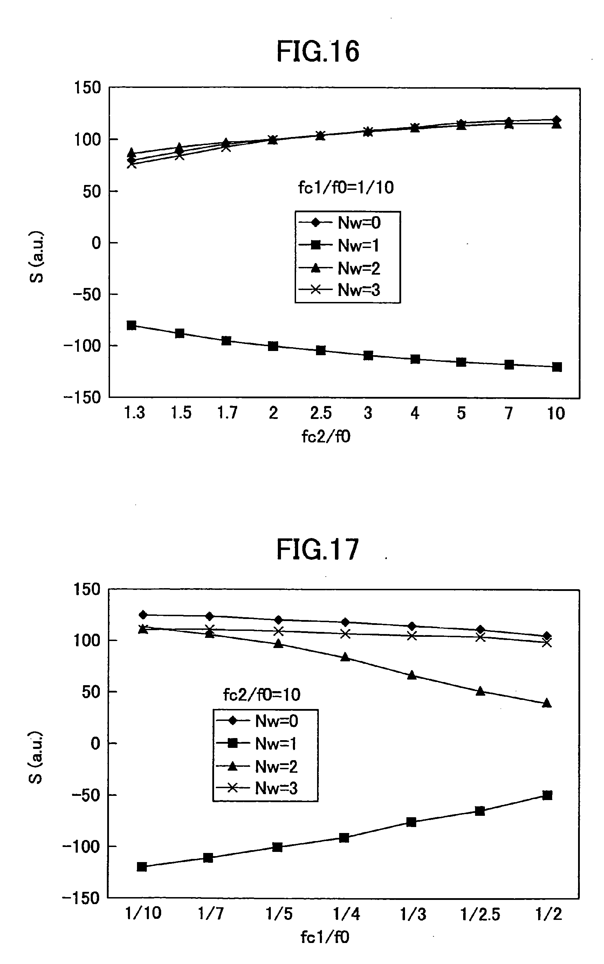

FIGS. 16 and 17 shows examples of results of the computer simulation carried out according to the above-described conditions.

FIG. 16 shows a signal level S of the demodulated signal Sdm corresponding to each wobble number obtained when fc1/f0 is fixed as 1/10 while fc2/f0 is changed between 1.3 and 10.

FIG. 17 shows a signal level S of the demodulated signal Sdm corresponding to each wobble number obtained when fc2/f0 is fixed as 10 while fc1/f0 is changed between 1/10 and 1/2.

It is noted that the calculation results shown in FIGS. 16 and 17 are obtained from averaging results obtained from a plurality of times of calculations. Further, a unit of the signal level of the demodulated signal Sdm in FIGS. 16 and 17 is an arbitrary unit (a.u.).

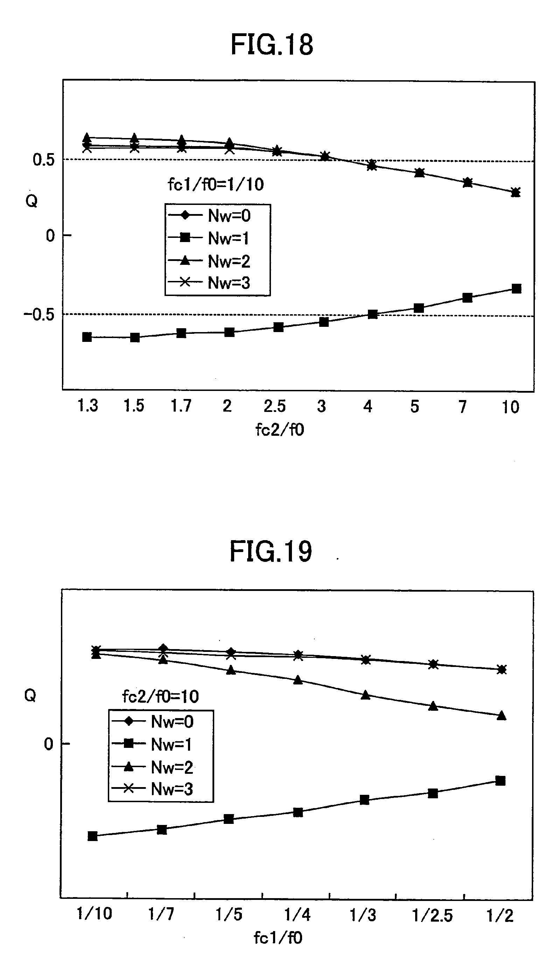

FIG. 18 shows a calculation result of an index Q concerning a signal quality obtained from the following formula (1) from the calculation results shown in FIG. 16:

$$Q = (S/Smax)/(fc2/f0)^{1/2} \quad ... \quad (1)$$

Smax in the above formula (1) denotes a signal level of the demodulated signal Sdm obtained when fc2/f0 = 10. The signal quality can be regarded as superior as the absolute value of the index Q becomes larger.

FIG. 19 shows a calculation result of an index Q concerning a signal quality obtained from the following formula (2) from the calculation results shown in FIG. 17:

$$Q = (S/Smax)/(fc1/f0)^{1/2} \quad ... \quad (2)$$

Smax in the above formula (2) denotes a signal level of the demodulated signal Sdm obtained when fc1/f0 = 1/2. The signal quality can be regarded as superior as the absolute value of the index Q becomes larger.

In the low pass filter circuit g2, as shown in FIG. 16, the absolute value of the signal level S of the demodulated signal Sdm tends to decrease as fc2/f0 becomes smaller. Further, as shown in FIG. 18, the absolute value of the index Q has a peak when fc2/f0 is in a range between 1.2 and 1.3. Further, when fc2/f0 is in a range between 1.3 and 10, the absolute value of the index Q tends to decrease as fc2/f0 becomes larger. The demodulated signal Sdm is superior as each of the signal level S and the index Q is larger. However, as described above, the signal level S and the index Q tend to conflict with one another with respect to the value of fc2/f0 according to the simulation results.

The present inventor and so forth has found out empirically that an absolute level of the demodulated signal Sdm should be on the order of 100 (a.u.) and also, an absolute value of the index Q should be equal to or higher than 0.5 are required in order that a phase change position in the phase modulated wave part can be properly recognized and a signal of the phase modulated wave part can be properly extracted.

Therefrom, from FIG. 16 and FIG. 18, it can be seen that fc2/f0 should fall within a range between 1.7 and 3 in order that a phase change position in the phase modulated wave part can be properly recognized and a signal of the phase modulated wave part can be properly extracted.

In the high pass filter g1, as shown in FIG. 17, the absolute values of the signal levels S of the demodulated signals Sdm corresponding to Nw = 1 and Nw = 2 tend to sharply decrease as fc1/10 increases. Further, as shown in FIG. 19, the absolute values of the index Q corresponding to Nw = 1 and Nw = 2 tend to sharply decrease as fc1/f0 increases. That is, the signal level S and the index Q have the same tendency with respect to the value of fc1/f0.

Therefrom, from FIGS. 17 and 19, it is seen that fc1/f0 should be equal to or lower than 1/5 in order that a phase change position in the phase modulated wave part can be properly recognized and a signal of the phase modulated wave part can be properly extracted, as a result of analysis made in the same manner as that of the above-described case of the low pass filter circuit g2.

According to the present embodiment of the present invention, setting is made such that 'fc2/f0 = 2', and 'fc1/f0 = 1/7', as one example.

«Recording Processing»

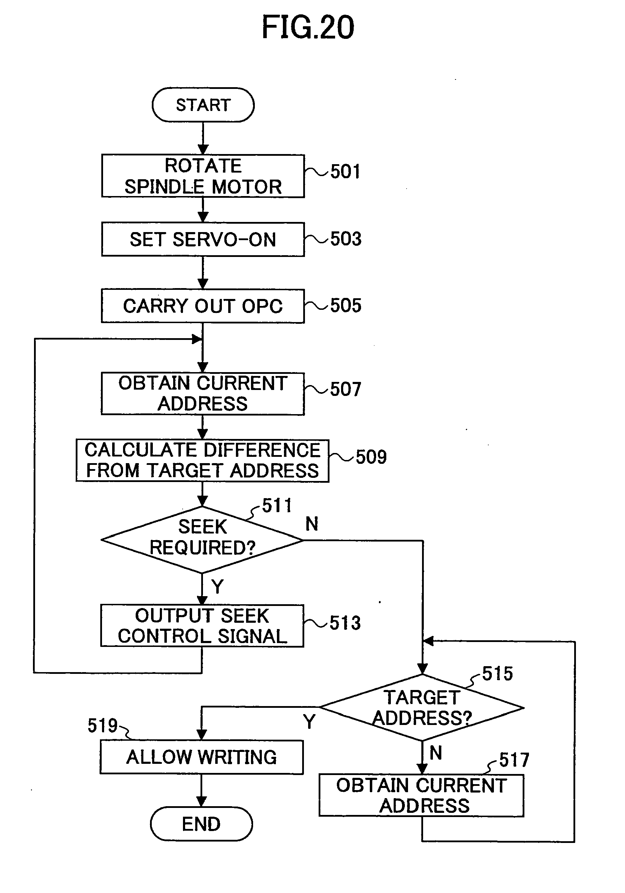

Next, with reference to FIG. 20, processing in the optical disk apparatus 20 carried out when a recording request command is received from a host is briefly described.

FIG. 20 is a flow chart corresponding to a series of processing algorithm carried out by the CPU 40. When the recording request command is received from the host, a top address of a predetermined program corresponding to the flow chart of FIG. 20 is set in a program counter of the CPU 40, and recording processing is started.

In Step 501, a control signal for controlling rotation of the spindle motor 22 is generated based on a predetermined recording speed, and is output to the motor driver 27. Further, a notification that the recording request command has been received is sent to the reproduced signal processing circuit 28. Further, an instruction is sent to the buffer manager 37 to cause it to store data (recording data) received from the host, in the buffer RAM 34.

In Step 503, after it is determined that rotation of the optical disk 15 has reached a predetermined line velocity, the servo-on mode is set in the servo controller 33. Thereby, as described above, tracking control and focusing control are carried out. The tracking control and the focusing control are carried out at appropriate timing until the recording processing is finished. Further, in the high pass filter circuit g1 and in the low pass filter circuit g2, the cut-off frequencies are set respectively according to the basic frequency as mentioned above.

In Step 505, OPC (optimum power control) is carried out based on the predetermined recording speed, and thus, optical recording power is obtained. Specifically, the recording power is changed stepwise, and predetermined data is written in an area called PCA (power calibration area) of the optical disk on a trial basis. After that, the thus-written data is reproduced in sequence. Then, when a value of asymmetry detected from the RF signal coincides with a predetermined target value obtained from an experiment or such, it is determined that the highest recording quality is thus obtained. Then, the recording power applied at this time is determined as being an optimum recording power to be actually applied.

In Step 507, based on the address signal Sad from the address decoding circuit 28h, a current address on the optical disk is obtained.

In Step 509, a difference (address different) between the current address and a target address obtained from the recording request command is calculated.

In Step 511, based on the address difference, it is determined whether or not seek operation is required. There, a threshold value stored in the flash memory 39 as one of the above-mentioned seek information is referred to, and, when the address difference exceeds the threshold, it is determined that seek operation is required. Then, Step 513 is carried out.

In Step 513, A seek motor control signal according to the address difference is output to the motor driver 27. Thereby, the seek motor is driven, and seek operation is carried out. Then Step 507 is returned to.

On the other hand, when the address difference does not exceed the threshold value in Step 511, it is determined that no seek operation is required, and Step 515 is then carried out.

In Step 515, it is determined whether or not the current address coincides with the target address. When the current address does not coincide with the target one, Step 517 is then carried out.

In Step 517, the current address is obtained based on the address signal Sad from the address decoding circuit 28h. Then, Step 515 is returned to.

After that, until a result of the determination in Step 515 becomes the affirmative one, the processing of Steps 515 through 517 is repeated.

When the current address agrees with the target address in Step 515, Step 519 is carried out.

In Step 519, the encoder 25 is allowed to carry out writing. Thereby, the recording data is written in the optical disk 15 through the encoder 25, the laser control circuit 24 and the optical pickup device 23. After all the recording data has thus been written in the optical disk 15, the current recording processing is finished after predetermined processing is carried out.

«Reproducing Processing»

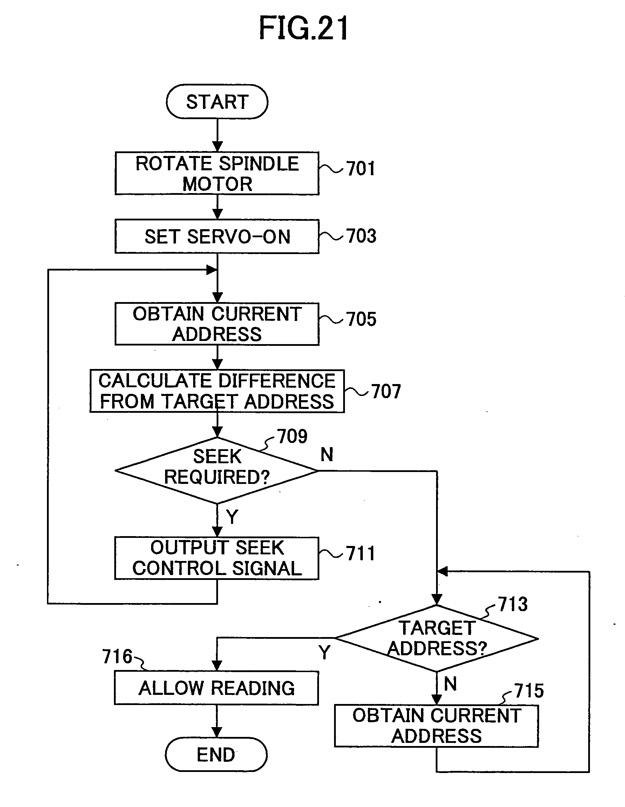

Processing (reproducing processing) of the optical disk apparatus carried out when a reproducing request command is received from the host is described with reference to FIG. 21, next.

FIG. 21 is a flow chart corresponding to a series of processing algorithm carried out by the CPU 40. When the reproducing request command is received from the host, a top address of a predetermined program corresponding to the flow chart of FIG. 20 is set in a program counter of the CPU 40, and reproducing processing is started.

In Step 701, a control signal for controlling rotation of the spindle motor 22 is generated based on a predetermined reproducing speed, and is output to the motor driver 27. Further, a notification that the reproducing request command has been received is sent to the reproduced signal processing circuit 28.

In Step 703, after it is determined that rotation of the optical disk 15 has reached a predetermined line velocity, the servo-on mode is set in the servo controller 33. Thereby, as described above, tracking control and focusing control are carried out. The tracking control and the focusing control are carried out at appropriate timing until the reproducing processing is finished. Further, the address data of the track is output to the CPU 40 from the decoder 28e based on the RF signal.

In Step 705, based on the address data from the decoder 28e, a current address is obtained.

In Step 707, a difference (address different) between the current address and a target address extracted from the reproducing request command is calculated.

In Step 709, the same as in Step 511, it is determined whether or not seek operation is required. When it is determined in Step 709 that seek operation is required, Step 711 is carried out.

In Step 711, a seek motor control signal according to the address difference is output to the motor driver 27. Then Step 705 is returned to.

On the other hand, when the address difference does not exceed the threshold value in Step 709, it is determined that no seek operation is required, and Step 713 is then carried out.

In Step 713, it is determined whether or not the current address coincides with the target address. When the current address does not coincide with the target one, Step 715 is then carried out.

In Step 715, the current address is obtained based on the address data from the decoder 28e. Then, Step 713 is returned to.

After that, until a result of the determination in Step 713 becomes the affirmative one, the processing of Steps 713 through 715 is repeated.

When the current address agrees with the target address in Step 713, Step 717 is carried out.

In Step 717, an instruction is given to the reproduced signal processing circuit 28 to cause it to carry out reading. Thereby, the reproduced signal processing circuit 28 obtains reproduced data, which is then stored in the buffer RAM 34. The reproduced data is transferred to the host in sector units through the buffer manager 37 and the interface 38. Then, after all the data reproduction according to the instructions given by the host has been finished, the current reproducing processing is finished after predetermined processing is carried out.

It is noted that detection of the basic frequency f0 in the basic frequency detecting circuit g9 is carried out at a necessary timing until the recording processing or the reproducing processing is finished. Then, in the cut-off frequency setting circuit g10, the cut-off frequency setting signal Slfc is updated in such a manner that the setting of fc2/f0 = 2 is approximately kept, and also, the cut-off frequency setting signal Shfc is updated in such a manner that the setting of fc1/f0 = 1/7 is approximately kept, according to the thus-detected basic frequency f0. That is, the respective cut-off frequency setting signals are according to the basic frequency f0 detected at each timing.

As can be seen from the above description, the phase demodulating circuit in the wobble signal demodulating circuit is embodied by the multiplier g3, the integrating circuit g4, the sample and hold circuit g5, the control signal generating circuit g6, the delay adjusting circuit g7 and the sine wave generating circuit g8, in the optical disk apparatus 20 according to the present embodiment.

Further, the wobble signal demodulating method according to the present invention is embodied by processing operation carried out by the demodulated signal generating circuit 28g.

Further, the data recording part is embodied by the optical pickup device 23, the CPU 40 and the program executed by the CPU 40. However, the present invention is not limited to this embodiment. That is, the above-described embodiment is merely one example, and, for example, it is possible that, a part of the data recording part embodied by the processing carried out by the CPU 40 according to the program may be configured by a hardware.

As described above, in the present embodiment, the cut-off frequency fc1 of the high pass filter circuit g1 is set approximately equal to 1/7 times the basic frequency f0 of the wobble signal in the demodulated signal generating circuit 2.8g. Thereby, it is possible to reduce a low frequency noise while suppressing signal degradation of the phase modulated wave part of the wobble signal. Accordingly, it is possible to properly recognize a phase change position in the phase modulated wave part, and as a result, it is possible to demodulate the phase modulated wave part from the wobble signal obtained based on reflected light from the recording surface of the optical disk with a high accuracy.

Further, in the present embodiment, the cut-off frequency fc2 of the low pass filter circuit g2 is set approximately twice the basic frequency f0 of the wobble signal in the demodulated signal generating circuit 28g. Thereby, it is possible to reduce a high frequency noise while suppressing signal degradation of the phase modulated wave part of the wobble signal. Accordingly, it is possible to properly recognize a phase change position in the phase modulated wave part, and as a result, it is possible to demodulate the phase modulated wave part from the wobble signal obtained based on reflected light from the recording surface of the optical disk with a high accuracy.

Further, according to the present embodiment, the cut-off frequency in each filter circuit is set in the demodulated signal generating circuit 28g according to the basic frequency f0 detected approximately in a real-time manner by the basic frequency detecting circuit g9. As a result, the wobble signal can be phase-demodulated stably with a high accuracy even when the disk rotational speed changes.

Further, according to the present embodiment, the wobble signal is phase-demodulated with a high accuracy by the demodulated signal generating circuit 28g. As a result, it is possible to obtain the address information with a high accuracy by the address decoding circuit 28h. Accordingly, it is possible to determine a recording start position with a high accuracy, and as a result, it is possible to carry out recording with a superior recording quality.

In the above-described embodiment, the basic frequency detecting circuit g9 detects the basic frequency f0 based on the timing clock signal Stim generated by the clock signal generating circuit 28f. However, it is not necessary to limit to this manner. For example, the basic frequency f0 may be obtained instead from line velocity information obtained from the CPU 40.

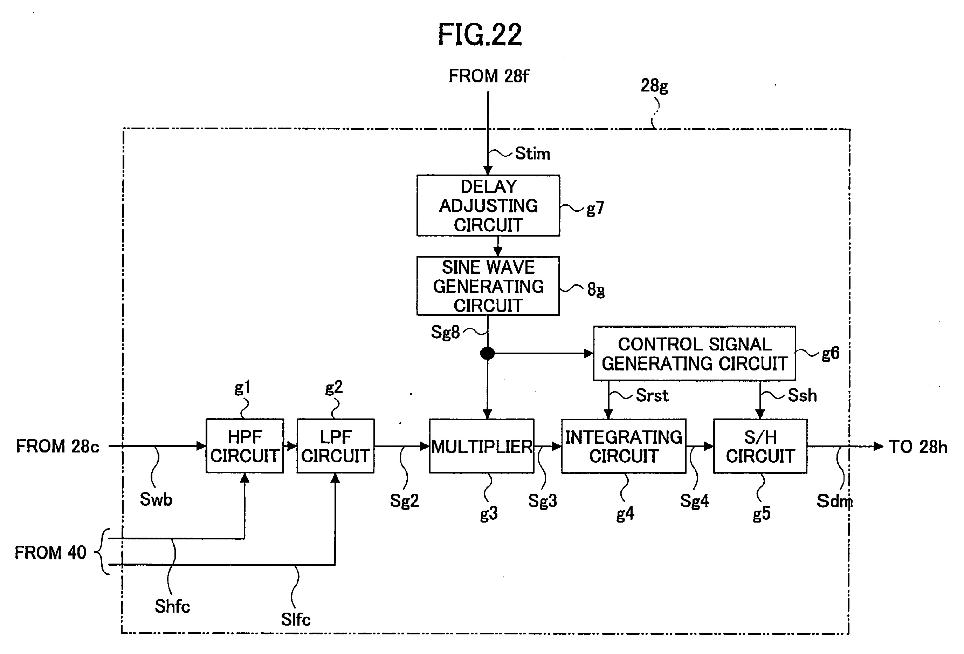

Further, in the above-described embodiment, the cut-off setting signal Slfc and the cut-off setting signal Shfc are generated by the cut-off frequency setting circuit g10. However, it is not necessary to limit to this manner. For example, instead, as shown in FIG. 22, the CPU 40 itself may generate the cut-off setting signal Slfc and the cut-off setting signal Shfc. In this case, the timing clock signal Stim generated by the clock signal generating circuit 28f is also output to the CPU 40.

Further, in the above-described embodiment, the optical disk 15 conforms to the DVD+R standard. However, the present invention should not be limited to this manner. For example, DVD+RW may be applied instead.

Further, in the above-described embodiment, the optical disk apparatus has the function of data recording and data reproducing. However, the present invention is not limited thereto. For example, the present invention may also be applied to an optical disk apparatus which has only a function of at least recording data, from among functions of recording data, reproducing data and deleting data.

Furthermore, in the above-described embodiment, the optical pickup device 23 has only one semiconductor laser. However, the present invention is not limited thereto. For example, a plurality of semiconductor lasers which emit light beams having mutually different wavelengths may be provided. In this case, at least one of a semiconductor laser emitting a light beam having a wavelength of approximately 405 nm, a semiconductor laser emitting a light beam having a wavelength of approximately 660 nm and a semiconductor laser emitting a light beam having a wavelength of approximately 780 nm may be included. That is, the optical disk apparatus may be an optical disk apparatus having a capability of handling a plurality of types of optical disks conforming to mutually different standards.

Furthermore, in the above-mentioned embodiment, the interface 38 conforms to the ATAPI standard. However, it is not necessary to limit thereto. For example, the interface 38 may conform to a standard of any one of ATA (AT Attachment), SCSI (Small Computer System Interface), USB (Universal Serial Bus) 1.0, USB 2.0, IEEE1394, IEEE802.3, serial ATA and serial ATAPI.

INDUSTRIAL APPLICABILITY

The present invention is applicable to a storage in a computer, an AV apparatus such as a DVD recorder, a DVD player or such, a camera, and so forth.

**Claims**

1. A wobble signal demodulating method for demodulating a wobble signal, obtained from reflected light reflected from a recording surface of an optical disk having a wobbling track produced thereon, including a carrier wave part having a predetermined basic frequency and a phase modulation wave part having predetermined information added thereto, comprising:

   a first step of extracting, from the wobble signal, a frequency component at least exceeding 1/5 of said basic frequency; and
   a second step of carrying out phase demodulation of the phase modulation wave part, based on the thus-extracted frequency component and a clock signal generated from the carrier wave part.

2. The wobble signal demodulating method as claimed in claim 1, wherein:

   a low frequency noise component included in the wobble signal is reduced as a result of said frequency component being extracted from the wobble signal in said first step.

3. A wobble signal demodulating method for demodulating a wobble signal, obtained from reflected light reflected from a recording surface of an optical disk having a wobbling track produced thereon, including a carrier wave part having a predetermined basic frequency and a phase modulation wave part having predetermined information added thereto, comprising:

   a first step of extracting, from the wobble signal, a frequency component lower than a specific frequency falling within a frequency range between 1.7 times and 3 times the basic frequency; and
   a second step of carrying out phase demodulation of the phase modulation wave part, based on the thus-extracted frequency component and a clock signal generated from the carrier wave part.

4. The wobble signal demodulating method as claimed in claim 3, wherein:

   a high frequency noise component included in the wobble signal is reduced as a result of said frequency component being extracted from the wobble signal in said first step.

5. A wobble signal demodulating circuit for demodulating a wobble signal, obtained from reflected light reflected from a recording surface of an optical disk having a wobbling track produced thereon, including a carrier wave part having a predetermined basic frequency and a phase modulation wave part having predetermined information added thereto, comprising:

   a high pass filter circuit allowing a frequency component at least exceeding 1/5 times said basic frequency to pass therethrough; and

a phase demodulating circuit configured to carry out phase demodulation of the phase modulation wave part, based on an output signal of said high pass filter circuit and a clock signal generated from the carrier wave part.

6. The wobble signal demodulating circuit as claimed in claim 5, wherein:

a cut-off frequency of said high pass filter circuit is a frequency equal to or lower than 1/5 times the basic frequency.

7. The wobble signal demodulating circuit as claimed in claim 6, further comprising a high pass filter cut-off frequency setting circuit configured to set the cut-off frequency of the high pass filter circuit based on the basic frequency.

8. A wobble signal demodulating circuit for demodulating a wobble signal, obtained from reflected light reflected from a recording surface of an optical disk having a wobbling track produced thereon, including a carrier wave part having a predetermined basic frequency and a phase modulation wave part having predetermined information added thereto, comprising:

a low pass filter circuit allowing a frequency component lower than a specific frequency falling within a frequency range between 1.7 times and 3 times the basic frequency to pass therethrough; and
a phase demodulating circuit configured to carry out phase demodulation of the phase modulation wave part, based on an output signal of said low pass filer circuit and a clock signal generated from the carrier wave part.

9. The wobble signal demodulating circuit as claimed in claim 8, further comprising a high pass filter circuit allowing a frequency component at least exceeding 1/5 times the basic frequency to pass therethrough, wherein:

said low pass filter allows a frequency component lower than said specific frequency included in an output signal of said high pass filter circuit to pass therethrough

10. The wobble signal demodulating circuit as claimed in claim 9, wherein:

a cut-off frequency of the high pass filter circuit is a frequency equal to or lower than 1/5 times the basic frequency.

11. The wobble signal demodulating circuit as claimed in claim 10, further comprising a high pass filter cut-off frequency setting circuit configured to set the cut-off frequency of the high pass filter circuit based on the basic frequency.

12. The wobble signal demodulating circuit as claimed in claim 8, wherein:

a cut-off frequency of said low pass filer circuit is said specific frequency.

13. The wobble signal demodulating circuit as claimed in claim 12, further comprising a low pass filter cut-off frequency setting circuit configured to set the cut-off frequency of the low pass filter circuit based on the basic frequency.

14. The wobble signal demodulating circuit as claimed in claim 5 or 8, further comprising a basic frequency obtaining circuit configured to obtain the basic frequency from the wobble signal.

15. An optical disk apparatus for extracting address information from a wobble signal, obtained from reflected light reflected from a recording surface of an optical disk having a wobbling track produced thereon, including a carrier wave part having a predetermined basic frequency and a phase modulation wave part having predetermined information added thereto; and carrying out at least recording data from among recording, reproducing and deleting data, comprising:

a demodulated signal generating circuit having a high pass filter circuit allowing a frequency component at least exceeding 1/5 times said basic frequency to pass therethrough, and carrying out phase demodulation of the phase modulation wave part, based on an output signal of said high pass filter circuit and a clock signal generated from the carrier wave part;
an address decoding circuit detecting an address of the optical disk from a demodulated signal obtained from said demodulated signal generating circuit; and
a motor driver configured to detect a difference between said address detected by said address decoding circuit and a target address, and moving an optical pickup.

**16.** An optical disk apparatus for extracting address information from a wobble signal, obtained from reflected light reflected from a recording surface of an optical disk having a wobbling track produced thereon, including a carrier wave part having a predetermined basic frequency and a phase modulation wave part having predetermined information added thereto; and carrying out at least recording data from among recording, reproducing and deleting data, comprising:

a demodulated signal generating circuit having a low pass filter circuit allowing a frequency component lower than a specific frequency falling within a frequency range between 1.7 times and 3 times the basic frequency, and carrying out phase demodulation of the phase modulation wave part, based on an output signal of said low pass filter circuit and a clock signal generated from the carrier wave part;

an address decoding circuit detecting an address of the optical disk from a demodulated signal obtained from said demodulated signal generating circuit; and

a motor driver configured to detect a difference between said address detected by said address decoding circuit and a target address, and moving an optical pickup.

**17.** The optical disk apparatus as claimed in claim 16, wherein:

said modulated signal generating circuit further has a high pass filer circuit allowing a frequency component at least exceeding 1/5 times the basic frequency to pass therethrough, wherein:

said low pass filter circuit allows a frequency component lower than said specific frequency included in an output signal of said high pass filter to pass therethrough.

**18.** The optical disk apparatus as claimed in claim 15 or 16, wherein:

said optical disk comprises an optical disk conforming to a standard of DVD+R or DVD+RW.

## FIG.1

EP 1 667 124 A2

# FIG.2

# FIG.3

INFORMATION FRAME

PHASE MODULATED
WAVE PART 11
ADIP UNIT

SYNCHRONIZATION
INFORMATION
PART

ADIP
INFORMATION
PART

CARRIER WAVE PART 10

WOBBLE NUMBER Nw

| 91 | 92 | 0 | 1 | 2 | 3 | 4 | 5 | 6 | 7 | 8 | 9 | 24 | 25 | 26 | 27 | 28 | 29 | 91 | 92 | 0 | 1 |

WOBBLE PERIOD 12

EP 1 667 124 A2

(A)

ADIP INFORMATION PART

WOBBLING SHAPE

WOBBLE NUMBER
Nw

| 4 | 5 | 6 | 7 |

FIG.4

(B)

ADIP INFORMATION PART

WOBBLING SHAPE

WOBBLE NUMBER
Nw

| 4 | 5 | 6 | 7 |

(A)

SYNCHRONIZATION
INFORMATION PART

WOBBLING SHAPE

WOBBLE NUMBER
Nw

| 0 | 1 | 2 | 3 |

FIG.5

(B)

SYNCHRONIZATION
INFORMATION PART

WOBBLING SHAPE

WOBBLE NUMBER
Nw

| 0 | 1 | 2 | 3 |

# FIG.6

| INFORMATION FRAME NUMBER | SYNCHRONIZATION INFORMATION PART | | ADIP INFORMATION PART |
|---|---|---|---|
| | WOBBLE NUMBER 0 | WOBBLE NUMBER 1-3 | WOBBLE NUMBER 4-7 |
| FRAME 1 | WORD SYNC | | |
| FRAME 2 | BIT SYNC | | DATA BIT 1 |
| FRAME 3 | BIT SYNC | | DATA BIT 2 |
| FRAME 4 | BIT SYNC | | DATA BIT 3 |
| FRAME 5 | BIT SYNC | | DATA BIT 4 |
| FRAME 6 | BIT SYNC | | DATA BIT 5 |
| FRAME 7 | BIT SYNC | | DATA BIT 6 |
| FRAME 8 | BIT SYNC | | DATA BIT 7 |
| . . . | . . . | | . . . |
| FRAME 49 | BIT SYNC | . | DATA BIT 48 |
| FRAME 50 | BIT SYNC | | DATA BIT 49 |
| FRAME 51 | BIT SYNC | | DATA BIT 50 |
| FRAME 52 | BIT SYNC | | DATA BIT 51 |

# FIG.7

FROM 24

51
LD
52
54
60
58
PD
TO 28
23
15

Z
Y ⊗ → X

EP 1 667 124 A2

# FIG.8

FROM PD → I/V AMPLIFIER (28a)

SERVO SIGNAL DETECTING CIRCUIT (28b) → TO 33

RF SIGNAL DETECTING CIRCUIT (28d) — Srf → DECODER (28e) → TO 34, TO 40

WOBBLE SIGNAL DETECTING CIRCUIT (28c) — Swb → CLOCK SIGNAL GENERATING CIRCUIT (28f) — Wck → TO 25

CLOCK SIGNAL GENERATING CIRCUIT — Stim → DEMODULATED SIGNAL GENERATING CIRCUIT (28g) → ADDRESS DECODING CIRCUIT (28h) — Sad → TO 40

28

EP 1 667 124 A2

# FIG.9

EP 1 667 124 A2

# FIG.10

GAIN

f0

FREQUENCY

# FIG.11

FROM 28f

28g

Stim

| BASIC FREQUENCY DETECTING CIRCUIT | g9 |
| DELAY ADJUSTING CIRCUIT | g7 |

CUT-OFF FREQUENCY SETTING CIRCUIT  g10

SINE WAVE GENERATING CIRCUIT  8g

Sg8

CONTROL SIGNAL GENERATING CIRCUIT  g6

Slfc

Shfc

g1    g2

Srst    Ssh

FROM 28c

HPF CIRCUIT    LPF CIRCUIT    MULTIPLIER    INTEGRATING CIRCUIT    S/H CIRCUIT    TO 28h

Swb

Sg2    g3    Sg3    g4    Sg4    g5    Sdm

EP 1 667 124 A2

(A)

FIG.12

GAIN

fc1    f0

FREQUENCY

(B)

GAIN

f0    fc2

FREQUENCY

# FIG.13

## FIG.14

(A)

Swb

(B)

$fc1=1/3 \times f0 \text{、} fc2=2 \times f0$

Sg2

(C)

$fc1=1/10 \times f0 \text{、} fc2=10 \times f0$

Sg2

## FIG.15

Nw=0    Nw=1    Nw=2    Nw=3

Swb

# FIG.16

fc1/f0=1/10

- ◆ Nw=0
- ■ Nw=1
- ▲ Nw=2
- ✕ Nw=3

# FIG.17

fc2/f0=10

- ◆ Nw=0
- ■ Nw=1
- ▲ Nw=2
- ✕ Nw=3

## FIG.18

## FIG.19

# FIG.20

START

ROTATE
SPINDLE MOTOR ~501

↓

SET SERVO-ON ~503

↓

CARRY OUT OPC ~505

↓

OBTAIN CURRENT
ADDRESS ~507

↓

CALCULATE DIFFERENCE
FROM TARGET ADDRESS ~509

↓

511
SEEK
REQUIRED? — N

Y ↓

OUTPUT SEEK
CONTROL SIGNAL ~513

519
ALLOW WRITING

↓

END

515
TARGET
ADDRESS? — Y

N ↓ 517

OBTAIN CURRENT
ADDRESS

# FIG.21

```
          ┌─────────────┐
          │    START    │
          └──────┬──────┘
                 │
                 ▼
      ┌──────────────────────┐
      │  ROTATE SPINDLE      │~701
      │      MOTOR           │
      └──────────┬───────────┘
                 │
                 ▼
      ┌──────────────────────┐
      │   SET SERVO-ON       │~703
      └──────────┬───────────┘
                 │
                 ▼
      ┌──────────────────────┐
      │  OBTAIN CURRENT      │~705
      │     ADDRESS          │
      └──────────┬───────────┘
                 │
                 ▼
      ┌──────────────────────┐
      │ CALCULATE DIFFERENCE │~707
      │ FROM TARGET ADDRESS  │
      └──────────┬───────────┘
                 │
                 ▼
                709
              ╱──────╲           N
             ╱  SEEK   ╲─────────────────►
             ╲ REQUIRED?╱
              ╲──────╱
                 │ Y
                 ▼
      ┌──────────────────────┐
      │  OUTPUT SEEK         │~711
      │  CONTROL SIGNAL      │
      └──────────────────────┘

                                      713
                                    ╱──────╲
                                   ╱ TARGET ╲◄───
                       Y          ╲ ADDRESS? ╱
          ◄───────────────────────╲──────╱
  716                                 │ N
  ┌──────────────────┐                ▼      715
  │  ALLOW READING   │      ┌──────────────────────┐
  └────────┬─────────┘      │  OBTAIN CURRENT      │
           │                │     ADDRESS          │
           ▼                └──────────────────────┘
      ┌─────────┐
      │   END   │
      └─────────┘
```

# FIG.22